# EUROPÄISCHE PATENTSCHRIFT

(11) **EP 3 334 884 B1**
(45) Veröffentlichungstag und Bekanntmachung des Hinweises auf die Patenterteilung: **13.07.2022**
(21) Anmeldenummer: 16751298.7
(22) Anmeldetag: 15.08.2016
(51) Int. Cl.: E05F 15/689, E05F 11/38

(54) **BAUEINHEIT MIT SCHEIBENTRÄGER FÜR FAHRZEUGSCHEIBE**
ASSEMBLY WITH GLASS PANE HOLDER FOR A GLASS PANE IN A MOTOR VEHICLE
ENSEMBLE AVEC SUPPORT DE VITRE POUR UNE VITRE DE VEHICULE

(30) Priorität: 14.08.2015 EP 15181081
(43) Veröffentlichungstag der Anmeldung: 20.06.2018
(73) Patentinhaber: SAINT-GOBAIN GLASS FRANCE, 92400 Courbevoie (FR)
(72) Erfinder: REUL, Bernhard, 52134 Herzogenrath (DE); HELWER, Katja, 52511 Geilenkirchen (DE); KLEIN, Marcel, 52499 Baesweiler (DE)
(74) Vertreter: Feist, Florian Arno
(86) Internationale Anmeldenummer: PCT/EP2016/069318
(87) Internationale Veröffentlichungsnummer: WO 2017/029253

(56) Entgegenhaltungen:
- EP-A1- 0 593 940
- WO-A1-2017/016766
- DE-A1- 1 923 311
- DE-A1- 4 011 541
- DE-A1-102007 046 320
- DE-A1-102013 003 532
- DE-A1-102013 003 533
- DE-U1-202004 019 286

## Beschreibung

Die Erfindung betrifft eine Baueinheit mit einem Scheibenträger für eine Fahrzeugscheibe, insbesondere für eine absenkbare Seitenscheibe einer Fahrzeugtür.

Fahrzeugscheiben weisen zunehmend elektrische Verbraucher auf. Beispielsweise sind die Fahrzeugscheiben mit einer Scheibenbeheizung, Antennen für Radio und/oder GPS, Sicherheitseinrichtungen oder Einrichtungen zur Erzeugung von optisch wahrnehmbaren Darstellungen versehen. Die elektrischen Verbraucher werden für gewöhnlich direkt beim Herstellungsprozess der Fahrzeugscheiben in einer separaten Schicht auf die Fahrzeugscheibe aufgebracht. Bei den üblicherweise in Kraftfahrzeugen vorgesehenen Verbundscheiben kann es sein, dass die elektrischen Verbraucher in die Verbundscheibe eingelassen sind.

Zum Anschließen der elektrischen Verbraucher beispielsweise an die elektrische Stromversorgung eines Kraftfahrzeuges ist der elektrische Verbraucher mit einem elektrischen Anschluss versehen. Der elektrische Anschluss ist üblicherweise durch einen in der Fahrzeugscheibe eingelassenen oder aufgebrachten Flachbandleiter mit einem daran endseitig angeordneten Steckerelement gebildet. Für gewöhnlich ragt der Flachbandleiter über einen Längenabschnitt aus der Fahrzeugscheibe heraus, so dass das Steckerelement in einem Abstand zu der Fahrzeugscheibe mit einem zugehörigen Buchsenelement einer elektrischen Zuleitung des Fahrzeuges verbunden werden kann.

Bei Fahrzeugscheiben, welche beispielsweise als absenkbare Seitenscheibe einer Fahrzeugtür eingesetzt werden, ist der aus der Fahrzeugscheibe herausragende Flachbandleiter relativ lang gehalten, um im eingebauten Zustand der Fahrzeugscheibe einen ausreichenden Bewegungsfreiraum für das Absenken zu geben und eine ungewollte Kabelstraffung während der Absenkbewegung zu vermeiden.

In der Praxis hat sich gezeigt, dass der aus der Fahrzeugscheibe herausragende Flachbandleiter den Einbau der Fahrzeugscheibe beispielsweise in eine Fahrzeugtür erschwert und eine Verlegung des Flachbandleiters in der Weise zu erfolgen hat, dass der Flachbandleiter in den freizuhaltenden Bewegungsbereich der Fahrzeugscheibe zu liegen kommt. Dies hat zur Folge, dass es durch die Absenkbewegung der Fahrzeugscheibe zu einer Beschädigung des Flachbandleiters und/oder zu einem Lösen der elektrischen Verbindung kommen kann.

Darüber hinaus hat sich in der Praxis gezeigt, dass der aus der Fahrzeugscheibe herausragende Flachbandleiter bei der Herstellung der Fahrzeugscheibe hinderlich ist. Auch kann es bei der Herstellung der Fahrzeugscheibe leicht zu einer Beschädigung des herausragenden Flachbandleiters und/oder eines gegebenenfalls daran angebrachten Stecker-/Buchsenelementes kommen. Darüber hinaus ist eine etwaige Beschädigung des Flachbandleiters auch im Zuge des Transports der Fahrzeugscheibe möglich.

Die deutsche Patentanmeldung DE 10 2013 003533 A1 zeigt eine Baueinheit mit einem Scheibenträger für eine Fahrzeugscheibe, bei der Kontakte einer elektrisch leitfähigen Schicht zur Kontaktierung von Gegenkontakten einer Scheibenaufnahme mittels Durchbrechungen einer Einzelscheibe auf die Oberfläche der Fahrzeugscheibe geführt sind. Nachteilig bei dieser Gestaltung ist die Notwendigkeit entsprechende Durchbrechungen in der Fahrzeugscheibe vorzusehen, was mit entsprechenden Kosten und einer relativ hohen Ausschussrate verbunden ist.

Weiterer Stand der Technik kann den Druckschriften DE 10 2013 003532 A1, DE 103 28 929 A1 und EP 2 801 689 A1 entnommen werden.

Demgegenüber liegt die Aufgabe der Erfindung darin, die eingangs genannten Nachteile herkömmlicher Baueinheiten mit einem Scheibenträger für eine Fahrzeugscheibe zu vermeiden.

Diese und weitere Aufgaben werden nach dem Vorschlag der Erfindung durch eine Baueinheit gemäß Patenanspruch 1 gelöst. Vorteilhafte Ausgestaltungen der Erfindung ergeben sich aus den Unteransprüchen.

Die vorliegende Erfindung zeigt eine Baueinheit, welche eine Fahrzeugscheibe, die in Form einer Verbundscheibe ausgebildet ist und über zwei durch eine Klebeschicht fest miteinander verbundene (Einzel-)Scheiben verfügt, umfasst. Die Fahrzeugscheibe kann eine absenkbare Seitenscheibe einer Fahrzeugtür sein. Die Baueinheit umfasst weiterhin einen Scheibenträger für die Fahrzeugscheibe. Der Scheibenträger weist einen Anbindungsabschnitt zum mechanischen Anbinden der Fahrzeugscheibe auf, der eine Aufnahme für die Fahrzeugscheibe ausbildet. Zudem weist der Scheibenträger wenigstens ein elektrisches Kontaktelement auf, welches an dem Scheibenträger festgelegt (d.h. befestigt) und zumindest teilweise innerhalb der Aufnahme angeordnet ist. Das elektrische Kontaktelement des Scheibenträgers dient zur elektrischen Kontaktierung eines elektrischen Gegenkontaktelements der Fahrzeugscheibe. Hierbei ist das elektrische Gegenkontaktelement in Form eines Flachbandleiters, beispielsweise Flachbandkabel, ausgebildet, der zwischen den beiden Einzelscheiben aus der Fahrzeugscheibe herausgeführt und an einer Oberfläche der Fahrzeugscheibe befestigt ist. Im Unterschied zu den im Stand der Technik bekannten Lösungen, insbesondere zur Baueinheit der eingangs genannten deutschen Patentanmeldung DE 10 2013 003533 A1, kann in vorteilhafter Weise eine Beschädigung der Einzelscheiben durch Ausbilden von Durchbrechungen vermieden werden. Der Flachbandleiter kann in einfacher und kostengünstiger Weise am Rand der Verbundscheibe zwischen den beiden Einzelscheiben herausgeführt und an einer Oberfläche der Fahrzeugscheibe befestigt werden. Die Ausschussrate bei der industriellen Serienfertigung erfindungsgemäßer Baueinheiten kann in vorteilhafter Weise niedrig gehalten werden.

Das Gegenkontaktelement der Fahrzeugscheibe dient zur Kontaktierung eines elektrischen Verbrauchers der Fahrzeugscheibe, der beispielsweise in die Verbundscheibe eingelassen ist. Denkbar ist jedoch auch, dass der elektrische Verbraucher mit einer Folie auf der Oberfläche der Verbundscheibe auflaminiert oder durch Beschichtung aufgebracht ist, so dass die Verbundscheibe eine zusätzliche Schicht mit dem elektrischen Verbraucher aufweist.

In der erfindungsgemäßen Baueinheit wird der Scheibenträger zur elektrischen Anbindung eines elektrischen Verbrauchers der Fahrzeugscheibe genutzt, beispielsweise um von dem Scheibenträger ausgehend dann einen elektrischen Anschluss mit der elektrischen Stromversorgung bzw. dem elektrischen Bordnetz eines Fahrzeuges herstellen zu können. Insofern kommt dem Scheibenträger neben seiner mechanischen Funktion als Träger für die Fahrzeugscheibe zusätzlich eine Funktion zur Herstellung einer elektrischen Verbindung mit einem elektrischen Verbraucher einer Fahrzeugscheibe zu.

Durch das elektrische Kontaktelement des Scheibenträgers ist in vorteilhafter Weise eine Zugentlastung für die elektrische Verbindung im Hinblick auf die Fahrzeugscheibe realisiert. Zudem kann durch das elektrische Kontaktelement an dem Scheibenträger eine elektrische Kontaktierung direkt mit dem an der Fahrzeugscheibe angebrachten Gegenkontaktelement realisiert werden, ohne dass es dazu einer Verbindungsleitung bedarf. Durch die Anordnung des Flachbandleiters an der Fahrzeugscheibe kann in einfacher Weise eine elektrische Kontaktierung mit dem Scheibenträger hergestellt werden, wenn die Fahrzeugscheibe an dem Scheibenträger montiert wird. Des Weiteren ergibt sich beispielweise eine Erleichterung beim Transport der Fahrzeugscheiben sowie bei ihrer Herstellung, da auf eine erhöhte Sorgfalt wegen eines hervorstehenden Flachbandleiters verzichtet werden kann. Ferner wird etwaigen Geräuschen durch die Vibration loser Kabel im Fahrzeugbetrieb entgegengewirkt. Durch die Erfindung sind somit sämtliche Nachteile hinfällig, welche sich insbesondere durch einen aus der Fahrzeugscheibe herausragenden Flachbandleiter mit einem etwaig daran angebundenen Steckerelement oder Buchsenelement ergeben.

Erfindungsgemäß ist es vorgesehen, dass das elektrische Kontaktelement derart an dem Scheibenträger festgelegt ist, dass bei einer mechanischen Anbindung der Fahrzeugscheibe an den Anbindungsabschnitt das elektrische Kontaktelement gegen das Gegenkontaktelement der Fahrzeugscheibe selbsttätig in elektrischen Kontakt tritt. Dadurch ist eine elektrische Kontaktierung zwischen der Fahrzeugscheibe und dem Scheibenträger in technisch einfacher Weise realisiert, denn durch die Befestigung der Fahrzeugscheibe an dem Scheibenträger kommt es zugleich zu der angestrebten elektrischen Kontaktierung des Kontaktelementes mit dem Gegenkontaktelement, ohne dass es dazu zusätzlicher Leitungsverbindungen oder Arbeitsschritte bedarf.

Erfindungsgemäß bildet der Anbindungsabschnitt eine Aufnahme für die Fahrzeugscheibe aus und das elektrische Kontaktelement ist zumindest teilweise innerhalb der Aufnahme angeordnet. Dadurch kommt der Aufnahme eine Doppelfunktion zu. Zum einen dient die Aufnahme der mechanischen Anbindung der Fahrzeugscheibe an den Scheibenträger. Zum anderen kommt der Aufnahme eine Funktion im Hinblick auf die Herstellung der elektrischen Kontaktierung zwischen dem elektrischen Kontaktelement des Scheibenträgers und dem elektrischen Gegenkontaktelement der Fahrzeugscheibe zu. Indem das elektrische Kontaktelement zumindest teilweise innerhalb der Aufnahme angeordnet ist, ist in technisch einfacher Weise realisiert, dass durch die mechanische Anbindung der Fahrzeugscheibe es zugleich zur elektrischen Kontaktierung zwischen den elektrischen Kontaktelementen von Fahrzeugscheibe und Scheibenträger kommt.

Besonders vorteilhaft ist die Aufnahme in Form einer Einsteckaufnahme ausgebildet, so dass die Fahrzeugscheibe durch Einstecken in die Aufnahme in technisch einfacher Weise mechanisch angebunden werden kann. Auf diese Weise ist eine stabile und haltbare Anbindung der Fahrzeugscheibe an dem Scheibenträger gegeben. Die Aufnahme kann beispielsweise durch ein zweischenkliges Profil, wie beispielsweise durch ein im Querschnitt U-förmiges Profil, des Scheibenträgers realisiert sein. Bei einer U-förmigen Aufnahme kann das elektrische Kontaktelement an wenigstens einer der Seitenwandungen und/oder an dem Bodenabschnitt der U-förmigen Aufnahme angeordnet, insbesondere ausgebildet sein. Es ist dadurch in technisch einfacher Weise eine elektrische Kontaktierung zwischen der Fahrzeugscheibe und deren Scheibenträger herzustellen, welche alleine durch das Einstecken der Fahrzeugscheibe in die Aufnahme bewirkt wird.

Indem das elektrische Kontaktelement zumindest teilweise innerhalb der Aufnahme angeordnet ist, ist die elektrische Kontaktierung im eingebauten Zustand der Fahrzeugscheibe an dem Scheibenträger von außen vor mechanischen Einwirkungen geschützt. Auch ist dadurch eine Maßnahme eingeleitet, um die elektrische Kontaktierung in einfacher Weise gegen etwaige Feuchtigkeit zu schützen. Durch die Einführung der Fahrzeugscheibe in die Aufnahme ist somit ein nach außen hin dichtender Verbindungsabschnitt und ein nach außen hin vor mechanischen Eingriffen schützender Schutzbereich realisiert bzw. in einfacher Weise zu realisieren.

Diese Vorteile sind auch realisiert, wenn nach einer Ausgestaltung der Erfindung der Scheibenträger, insbesondere der Anbindungsabschnitt, zumindest teilweise als Einhausung, insbesondere nach außen dichtende Einhausung, für den elektrischen Anschluss ausgebildet ist.

Es bietet sich an, dass das elektrische Kontaktelement des Scheibenträgers als flach bauendes Flachteil, insbesondere als Flachbandleiter, ausgebildet ist. Dadurch kann der Scheibenträger mit dem elektrischen Kontaktelement versehen werden, ohne dass es zu einer Bauteilvergrößerung des Scheibenträgers kommt. Zugleich lässt sich dadurch in einfacher Weise das elektrische Kontaktelement im Bereich bzw. innerhalb einer Aufnahme anordnen, welche zur Anbindung der Fahrzeugscheibe dient. Es bietet sich ferner an, dass das elektrische Kontaktelement in den Scheibenträger, beispielsweise einer Wandung des Scheibenträgers, zumindest teilweise eingeformt ist. Hierzu kann es vorgesehen sein, dass der Scheibenträger aus Kunststoff besteht oder Kunststoff aufweist. Beispielsweise kann das elektrische Kontaktelement von dem Kunststoff umspritzt sein. Dadurch lässt sich das elektrische Kontaktelement in technisch einfacher Weise an dem Scheibenträger ausbilden, insbesondere darin integrieren. Separate Verbindungsmittel, wie beispielsweise Schrauben, Nieten können eingespart werden.

Das elektrische Kontaktelement kann auch durch Klemmen, Kleben und/oder sonstiger kraftschlüssiger, stoffschlüssiger und/oder formschlüssiger Anbindung an dem Scheibenträger fixiert sein.

Erfindungsgemäß ist es vorgesehen, dass der Anbindungsabschnitt einen mit dem elektrischen Kontaktelement elektrisch verbindbaren oder verbundenen elektrischen Anschluss aufweist, an welchem wenigstens eine elektrische Zuleitung, insbesondere eine elektrische Stromversorgungsleitung und/oder eine elektrische Signalleitung elektrisch anschließbar ist. Dadurch bildet der Scheibenträger den elektrischen Anschluss für die elektrische Stromversorgung des elektrischen Verbrauchers der Fahrzeugscheibe. Etwaige Montagekräfte wirken somit gegen den elektrischen Anschluss an dem Scheibenträger, so dass dadurch die elektrische Leitungsführung an der Fahrzeugscheibe bzw. ein elektrischer Kontakt an der Fahrzeugscheibe hiervor und vor etwaiger Beschädigungen geschützt ist.

Der Scheibenträger kann im Bereich des elektrischen Anschlusses gezielt so dimensioniert sein, dass auch hohe Wirkkräfte beispielsweise durch die elektrische Zuleitung oder anderweitig auf den elektrischen Anschluss wirkende Kräfte ausgehalten werden und etwaige Beschädigungen oder ein Auseinandergehen der elektrischen Kontaktierung verhindert ist.

Nach einer weiteren vorteilhaften Ausführungsform der Erfindung kann es vorgesehen sein, dass der elektrische Anschluss wenigstens eine Klemme, Druckknopf, Drucktaste oder dergleichen elektrisches Verbindungselement aufweist oder daraus gebildet ist, an welchem die elektrische Zuleitung elektrisch anbindbar ist. Durch diese Maßnahme ist ein robuster und haltbarer elektrischer Anschluss an dem Scheibenträger realisiert.

Nach einer nicht erfindungsgemäßen Ausführungsform kann es vorgesehen sein, dass der elektrische Anschluss eine elektrische Anschlussleitung, beispielsweise einen Flachbandleiter, aufweist, welche mit dem elektrischen Kontaktelement des Scheibenträgers elektrisch verbunden ist. Dadurch kann eine elektrische Kontaktierung, beispielsweise mit der elektrischen Zuleitung bzw. einer elektrischen Zuleitung realisiert werden, welche in Abstand zu dem Scheibenträger endet. Zur Überbrückung dieses Abstandes dient dann die elektrische Anschlussleitung des Scheibenträgers, welche zu der Zuleitung hingeführt werden kann, um die elektrische Kontaktierung beispielsweise über eine Buchse-Steckerverbindung herzustellen. Hierzu bietet es sich an, dass der elektrische Anschluss auch einen Stecker oder eine Buchse aufweist, welcher bzw. welche an dem freien Ende der elektrischen Anschlussleitung vorgesehen ist. Denkbar ist, dass das elektrische Kontaktelement des Scheibenträgers durch die elektrische Anschlussleitung, beispielsweise einen Flachbandleiter, gebildet wird.

Der Stecker oder die Buchse des elektrischen Anschlusses des Scheibenträgers kann insbesondere in einem Abstand zum Scheibenträger angeordnet sein. Beispielsweise kann die elektrische Anschlussleitung aus einer Einführöffnung der Aufnahme für die Fahrzeugscheibe herausführen.

Erfindungsgemäß ist die Anschlussleitung an einem Ende von einem Gehäuse zumindest teilweise umgeben, welches in eine Materialaussparung an dem Anbindungsabschnitt lösbar eingeführt ist. Dadurch ist ein Austausch der Anschlussleitung in einfacher Weise möglich, beispielsweise um die Anschlussleitung gegen eine Anschlussleitung mit einer anderen Länge auszutauschen. Ebenso können herkömmliche Scheibenträger in einfacher Weise nachgerüstet werden. Durch das Gehäuse ist der elektrische Kontakt der Anschlussleitung gegen äußere mechanische Einwirkungen und/oder Feuchtigkeit geschützt.

Bei einer besonders vorteilhaften Ausgestaltung der Erfindung erstreckt sich das elektrische Gegenkontaktelement über zumindest einen Abschnitt eines Randbereiches der Fahrzeugscheibe. Eine solche Maßnahme begünstigt die Befestigung des aus der Verbundscheibe herausgeführten Flachbandleiters an der Oberfläche der Fahrzeugscheibe sowie die Montage der Fahrzeugscheibe am Scheibenträger, insbesondere wenn die Aufnahme in Form einer Einsteckaufnahme für die Fahrzeugscheibe ausgebildet ist.

In besonders vorteilhafter Weise ist das elektrische Gegenkontaktelement an der Fahrzeugscheibe derart positioniert, dass in Einbauposition an dem Scheibenträger das Gegenkontaktelement einen elektrischen Kontakt mit dem Kontaktelement des Scheibenträgers bildet.

Eine stabile und haltbare Anbindung des Gegenkontaktelementes an der Fahrzeugscheibe ist realisiert, wenn das Gegenkontaktelement an wenigstens einer der Flächenseiten der Fahrzeugscheibe festgelegt ist. Das Gegenkontaktelement kann an der Fahrzeugscheibe beispielsweise mittels Kleben befestigt sein. Dadurch kann das Gegenkontaktelement in technisch einfacher Weise an der Fahrzeugscheibe festgelegt werden.

Die Erfindung erstreckt sich weiterhin auf ein Kraftfahrzeug mit der vorstehend beschriebenen Baueinheit.

Weitere Ziele, Vorteile, Merkmale und Anwendungsmöglichkeiten der vorliegenden Erfindung ergeben sich aus der nachfolgenden Beschreibung mehrerer Ausführungsbeispiele.

Es zeigen:
- Fig. 1: eine Ausführungsform einer Baueinheit mit einem Scheibenträger und einer zugehörigen Fahrzeugscheibe in Explosionsdarstellung,
- Fig. 2: die Baueinheit gemäß Figur 1 in einer perspektivischen Darstellung,
- Fig. 3: eine weitere Ausführungsform einer nicht erfindungsgemäßen Baueinheit mit einem Scheibenträger und einer dazugehörigen Fahrzeugscheibe in perspektivischer Darstellung,
- Fig. 4: eine weitere Ausführungsform einer nicht erfindungsgemäßen Baueinheit mit einem Scheibenträger und einer Fahrzeugscheibe in perspektivischer Darstellung,
- Fig. 5: eine elektrische Zuleitung mit einem zweiteiligen Stecker in Explosionsdarstellung,
- Fig. 6: die elektrische Zuleitung mit dem Stecker gemäß Figur 5 im eingebauten Zustand an einer erfindungsgemäßen Baueinheit mit einem Scheibenträger und einer zugehörigen Fahrzeugscheibe in perspektivischer Darstellung.

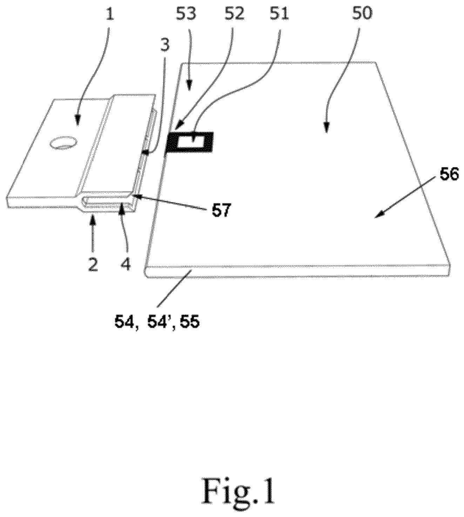

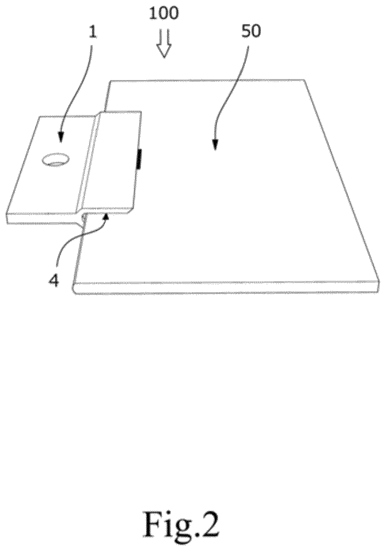

Figuren 1 und 2 zeigen - in schematischer Darstellung - eine Ausführungsform einer Baueinheit 100 mit einem Scheibenträger 1 und einer Fahrzeugscheibe 50. Die Figur 1 zeigt den Scheibenträger 1 und die Fahrzeugscheibe 50 getrennt voneinander, wohingegen in der Figur 2 der Scheibenträger 1 und die Fahrzeugscheibe 50 zusammengebaut sind und die Baueinheit 100 gebildet ist. Die Fahrzeugscheibe 50 kann eine absenkbare Seitenscheibe einer Fahrzeugtür sein. In diesem Fall wird die Fahrzeugscheibe 50 zusammen mit dem Scheibenträger 1 gemeinsam bewegt, insbesondere gemeinsam abgesenkt.

Die Fahrzeugscheibe 50 ist eine Verbundscheibe, welche zwei (Einzel-)Scheiben 54, 54' umfasst, die durch eine Klebeschicht 55 fest miteinander verbunden sind. Dem Fachmann ist der Aufbau einer Verbundscheibe wohlbekannt, so dass es sich erübrigt, dies in den Figuren 1 und 2 näher darzustellen.

Der Scheibenträger 1 weist einen Anbindungsabschnitt 2 auf, mittels welchem die Fahrzeugscheibe 50 an den Scheibenträger 1 angebunden wird. Der Anbindungsabschnitt 2 ist als Aufnahme 4 ausgebildet, die - wie gezeigt - insbesondere als eine Einsteckaufnahme ausgebildet sein kann, welche beispielsweise im Querschnitt U-förmig ist.

Die Fahrzeugscheibe 50 wird mit einem Ende bzw. Endbereich in die Aufnahme 4 eingeschoben, wodurch die mechanische Verbindung zwischen der Fahrzeugscheibe 50 und dem Scheibenträger 1 hergestellt wird.

Der Fahrzeugscheibe 50 ist ein (in den Figuren 1 und 2 nicht dargestellter) elektrischer Verbraucher zugeordnet. Der elektrische Verbraucher kann Bestandteil einer separaten Schicht sein, welche auf die Fahrzeugscheibe 50 aufgebracht ist, oder auch in die Verbundscheibe eingelassen sein.

Um den (in den Figuren 1 und 2 nicht dargestellten) elektrischen Verbraucher an eine elektrische Energieversorgung und/oder ein elektrisches Steuergerät zur Steuerung des elektrischen Verbrauchers anbinden zu können, weist die Fahrzeugscheibe 50 ein elektrisches Gegenkontaktelement 51 auf, welches mit dem elektrischen Verbraucher elektrisch verbunden ist und beispielsweise in einem Abschnitt 52 eines Randbereiches 53 der Fahrzeugscheibe 50 angeordnet sein kann, der in die Aufnahme 4 des Scheibenträgers 1 eingeführt ist bzw. wird. Bevorzugt erstreckt sich das elektrische Gegenkontaktelement 51 zumindest teilweise über den Abschnitt 52 des Randbereiches 53.

Das Gegenkontaktelement 51 ist in Form eines Flachbandleiters ausgebildet, der zwischen den beiden Einzelscheiben 54, 54' im Randbereich aus der Verbundscheibe herausgeführt und auf einer Oberfläche 56, d.h. Flächenseite, der Fahrzeugscheibe 50 beispielsweise mittels Kleben befestigt ist.

Der Scheibenträger 1 weist in entsprechender Weise ein elektrisches Kontaktelement 3 auf, um mittels des elektrischen Gegenkontaktelementes 51 der Fahrzeugscheibe 50 eine elektrische Kontaktierung zu bilden.

Das elektrische Kontaktelement 3 des Scheibenträgers 1 ist bevorzugt im Bereich der Aufnahme 4 angeordnet, beispielsweise an einer der Seitenwandungen der Aufnahme 4 und/oder an dem Boden der Aufnahme 4, so dass durch Einschieben der Fahrzeugscheibe 50 in die Aufnahme 4 des Scheibenträgers 1 zugleich (selbsttätig) eine elektrische Kontaktierung zwischen den elektrischen Kontaktelementen 3 und 51 hergestellt wird. Durch die Baueinheit 100 kann der (in den Figuren 1 und 2 nicht dargestellte) elektrische Verbraucher an ein elektrisches Stromversorgungsnetz, beispielsweise ein elektrisches Bordnetz des Kraftfahrzeuges angeschlossen werden, ohne dass es dazu an der Fahrzeugscheibe 50 eines separaten an der Fahrzeugscheibe nach außen stehenden Kabels bedarf.

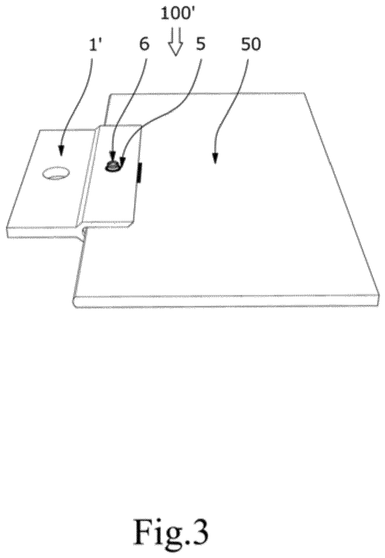

Figur 3 zeigt eine nicht erfindungsgemäße Ausführungsform einer Baueinheit 100' mit einem Scheibenträger 1' und einer zugehörigen Fahrzeugscheibe, welche die bereits in den Figuren 1 und 2 beschriebene Fahrzeugscheibe 50 sein kann. Die Baueinheit 100' gemäß der Figur 3 unterscheidet sich von der Baueinheit 100 gemäß der Figuren 1 und 2 unter anderem dadurch, dass an dem Scheibenträger 1' ein elektrischer Anschluss 5 vorgesehen ist, welcher durch einen Drucktaster 6, einen Druckknopf, eine Klemme oder dergleichen Verbindungselement gebildet sein kann oder ein solches Bauteil enthalten kann. Daran ist eine (in der Figur 3 nicht dargestellte) elektrische Zuleitung anbindbar. Die elektrische Zuleitung kann eine elektrische Stromversorgungsleitung, beispielsweise des Bordnetzes eines Kraftfahrzeuges, sein. Ergänzend oder alternativ kann die elektrische Zuleitung auch eine elektrische Signalleitung sein, beispielsweise um damit entsprechende Steuersignale an den elektrischen Verbraucher zu leiten.

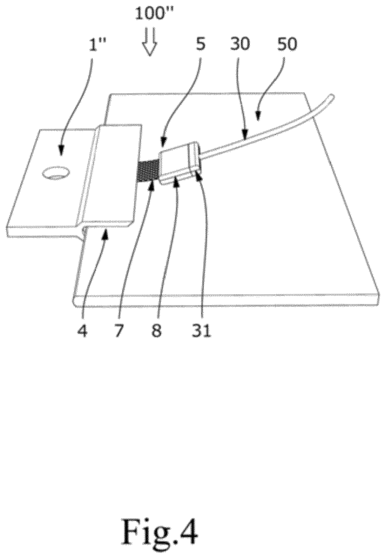

Figur 4 zeigt eine weitere nicht erfindungsgemäße Ausführungsform einer Baueinheit 100" mit einem Scheibenträger 1" und einer Fahrzeugscheibe, welche die Fahrzeugscheibe 50 sein kann. Die Baueinheit 100" unterscheidet sich von der Baueinheit 100' gemäß der Figur 3 unter anderem dadurch, dass dort der bei der Baueinheit 100" vorgesehene elektrische Anschluss 5 durch eine Buchse 8 und einer elektrischen Anschlussleitung 7 gebildet ist, die wiederum mit dem elektrischen Kontaktelement 3 des Scheibenträgers 1 elektrisch verbunden ist. Beispielsweise ist die elektrische Anschlussleitung 7 als Flachbandleiter ausgeführt und ragt aus der Einführöffnung 57 der Aufnahme 4 der Fahrzeugscheibe 50 nach außen, wobei die Buchse 8 mit einem Stecker 31 einer elektrischen Zuleitung 30 elektrisch verbunden ist.

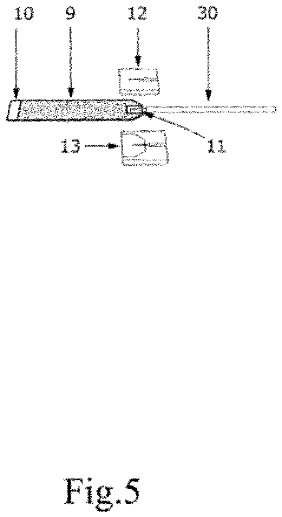

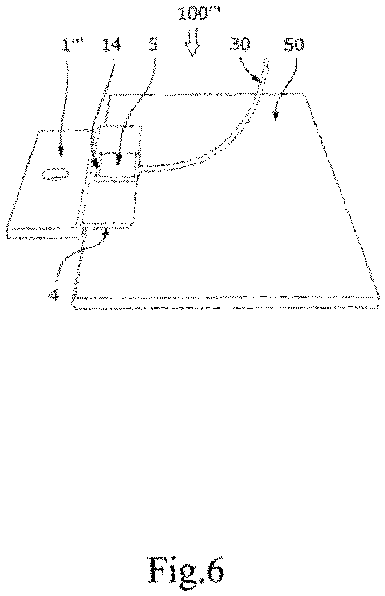

Figur 5 zeigt Bauteile einer Baueinheit 100‴ nach ner erfindungsgemäßen Ausführungsform, mit einem Scheibenträger 1‴ und einer Fahrzeugscheibe, welche die Fahrzeugscheibe 50 sein kann. Die Baueinheit 100‴ ist in Figur 6 gezeigt. Die in der Figur 5 dargestellten Bauteile betreffen eine elektrische Anschlussleitung 9 mit endseitig angeordneten elektrischen Kontakten 10 und 11. Der elektrische Kontakt 11 ist von einem vorzugsweise zweiteiligen Gehäuse umgeben, deren Gehäuseteile 12 und 13 den elektrischen Kontakt gegen mechanische Kräfte schützen und/oder gegen Feuchtigkeit von außen dichten.

Die Gehäuseteile 12 und 13 sind im zusammengebauten Zustand mit der elektrischen Anschlussleitung 9 dazu vorgesehen, in einer Aussparung einer Wandung der Aufnahme 4 des Scheibenträgers 1 eingebaut zu werden. Beispielsweise kann die Aussparung als Einsteckaufnahme ausgebildet sein, in welche das durch die Gehäuseteile 12 und 13 gebildete Gehäuse eingeschoben wird und somit dadurch das elektrische Kontaktelement 3 des Scheibenträgers 1‴ gebildet ist. Die Aussparung in der Wandung der Aufnahme 4 ist in der Figur 6 durch den Abschnitt 14 angedeutet. Die elektrische Anschlussleitung 9 gemäß der Figur 5 wird dann mit der elektrischen Anschlussleitung 30 verbunden, welche in der Figur 6 lediglich angedeutet ist.

### Bezugszeichenliste

- 1: Scheibenträger
- 1': Scheibenträger
- 1": Scheibenträger
- 1": Scheibenträger
- 2: Anbindungsabschnitt
- 3: elektrisches Kontaktelement
- 4: Aufnahme
- 5: elektrischer Anschluss
- 6: Drucktaster
- 7: elektrische Anschlussleitung
- 8: Buchse
- 9: elektrische Anschlussleitung
- 10: elektrischer Kontakt
- 11: elektrischer Kontakt
- 12: Gehäuseteil
- 13: Gehäuseteil
- 14: Abschnitt von 4 (Aussparung)
- 30: elektrische Zuleitung
- 31: Stecker
- 50: Fahrzeugscheibe
- 51: elektrisches Gegenkontaktelement
- 52: Abschnitt
- 53: Randbereich
- 54: Einzelscheibe
- 54': Einzelscheibe
- 55: Klebeschicht
- 56: Oberfläche
- 57: Einführöffnung
- 100: Baueinheit
- 100': Baueinheit
- 100": Baueinheit
- 100‴: Baueinheit

## Patentansprüche

1. Baueinheit (100; 100'; 100"; 100‴), umfassend:
eine Fahrzeugscheibe (50), welche zwei durch eine Klebeschicht (55) miteinander verbundene Einzelscheiben (54, 54') aufweist,
einen Scheibenträger (1; 1'; 1"; 1‴) für die Fahrzeugscheibe (50), mit einem Anbindungsabschnitt (2) zum mechanischen Anbinden der Fahrzeugscheibe (50), der eine Aufnahme (4) für die Fahrzeugscheibe (50) ausbildet, und wenigstens ein elektrisches Kontaktelement (3) aufweist, welches an dem Scheibenträger (1; 1'; 1"; 1‴) festgelegt und zumindest teilweise innerhalb der Aufnahme (4) angeordnet ist, wobei das elektrische Kontaktelement (3) zur elektrischen Kontaktierung mit einem elektrischen Gegenkontaktelement (51) der Fahrzeugscheibe (50) dient,
wobei das elektrische Kontaktelement (3) derart an dem Scheibenträger (1; 1', 1", 1‴) festgelegt ist, dass bei einer mechanischen Anbindung der Fahrzeugscheibe (50) an den Anbindungsabschnitt (2) das elektrische Kontaktelement (3) selbsttätig in elektrischen Kontakt mit dem Gegenkontaktelement (51) der Fahrzeugscheibe (50) gelangt,
wobei der Scheibenträger (1'; 1"; 1‴) einen mit dem elektrischen Kontaktelement (3) elektrisch verbindbaren oder verbundenen elektrischen Anschluss (5) aufweist, an welchem wenigstens eine elektrische Zuleitung (30) anschließbar ist,
wobei der elektrische Anschluss (5) eine elektrische Anschlussleitung (9) aufweist, welche mit dem elektrischen Kontaktelement (3) des Scheibenträgers (1; 1'; 1"; 1‴) elektrisch verbunden ist, **dadurch gekennzeichnet, dass** das elektrische Gegenkontaktelement (51) in Form eines Flachbandleiters ausgebildet ist, der zwischen den beiden Einzelscheiben (54, 54') aus der Fahrzeugscheibe (50) herausgeführt und an einer Oberfläche (56) der Fahrzeugscheibe (50) befestigt ist, und dass
die elektrische Anschlussleitung (9) an einem Ende von einem Gehäuse zumindest teilweise umgeben ist, welches in eine Materialaussparung (14) an dem Anbindungsabschnitt (2) lösbar eingeführt ist.

2. Baueinheit (100; 100'; 100"; 100‴) nach Anspruch 1, **dadurch gekennzeichnet, dass** die Aufnahme (4) des Anbindungsabschnitts (2) in Form einer Steckaufnahme zum Einstecken der Fahrzeugscheibe (50) ausgebildet ist.

3. Baueinheit (100; 100'; 100"; 100‴) nach Anspruch 1, **dadurch gekennzeichnet, dass** der elektrische Anschluss (5) am Anbindungsabschnitt (2) angeordnet und von außen zugänglich ist.

4. Baueinheit (100; 100'; 100"; 100‴) nach Anspruch 2 oder 3, **dadurch gekennzeichnet, dass** der elektrische Anschluss (5) wenigstens eine Klemme, Druckknopf, Drucktaster (6) oder dergleichen Verbindungselement aufweist oder daraus gebildet ist, an welchem die elektrische Zuleitung (30) elektrisch anbindbar ist.

5. Baueinheit (100; 100'; 100"; 100‴) nach Anspruch 1, **dadurch gekennzeichnet, dass** die elektrische Anschlussleitung (9) das elektrische Kontaktelement (3) des Scheibenträgers (1; 1'; 1"; 1‴) ausbildet.

6. Baueinheit (100; 100'; 100"; 100‴) nach einem der Ansprüche 1 bis 5, **dadurch gekennzeichnet, dass** der Scheibenträger (1"), insbesondere der Anbindungsabschnitt (2), zumindest teilweise als Einhausung, insbesondere nach außen dichtende Einhausung, für den elektrischen Anschluss (5) ausgebildet ist.

7. Baueinheit (100; 100'; 100"; 100‴) nach einem der vorhergehenden Ansprüche 1 bis 6, **dadurch gekennzeichnet, dass** das Gegenkontaktelement (51) an der Oberfläche (56) der Fahrzeugscheibe (50) mittels Kleben befestigt ist.

8. Baueinheit (100; 100'; 100"; 100‴) nach einem der Ansprüche 1 bis 7, **dadurch gekennzeichnet, dass** sich das elektrische Gegenkontaktelement (51) über zumindest einen Abschnitt (52) eines Randbereiches (53) der Fahrzeugscheibe (50) erstreckt.

9. Kraftfahrzeug mit einer Baueinheit (100; 100'; 100"; 100‴) nach einem der Ansprüche 1 bis 8.

## Claims

1. Assembly (100; 100'; 100"; 100‴), comprising:
a vehicle window (50), which has two individual panes (54, 54') bonded to one another by an adhesive layer (55),
a window support (1; 1'; 1"; 1‴) for the vehicle window (50), with a connection segment (2) for mechanically connecting the vehicle window (50), which connection segment forms a holder (4) for the vehicle window (50), and has at least one electrical contact element (3), which is fastened to the window support (1; 1'; 1"; 1‴) and is arranged at least partially within the holder (4), wherein the electrical contact element (3) serves to electrically contact an electrical counter contact element (51) of the vehicle window (50),
wherein the electrical contact element (3) is fastened to the window support (1; 1', 1", 1‴) such that upon mechanical connection of the vehicle window (50) to the connection segment (2), the electrical contact element (3) automatically makes electrical contact with the counter contact element (51) of the vehicle window (50),
wherein the window support (1'; 1"; 1‴) has an electrical connector (5) electrically connectable or connected to the electrical contact element (3), to which at least one electrical supply line (30) can be connected,
wherein the electrical connector (5) has an electrical connection line (9), which is electrically connected to the electrical contact element (3) of the window support (1; 1'; 1"; 1‴),
**characterized in that** the electrical counter contact element (51) is implemented in the form of a ribbon conductor that is routed out of the vehicle window (50) between the two individual panes (54, 54') and is fastened to a surface (56) of the vehicle window (50) and that the electrical connection line (9) is at least partially surrounded at one end by a housing, which is detachably inserted into a material recess (14) on the connection segment (2).

2. Assembly (100; 100'; 100"; 100‴) according to claim 1, **characterized in that** the holder (4) of the connection segment (2) is implemented in the form of a plug receptacle for plugging in the vehicle window (50).

3. Assembly (100; 100'; 100"; 100‴) according to claim 1, **characterized in that** the electrical connector (5) is arranged on the connection segment (2), and is accessible from the outside.

4. Assembly (100; 100'; 100"; 100‴) according to claim 2 or 3, **characterized in that** the electrical connector (5) has at least one clamp, snap, pushbutton (6), or a like connecting element or is formed therefrom, on which the electrical supply line (30) can be electrically connected.

5. Assembly (100; 100'; 100"; 100‴) according to claim 1, **characterized in that** the electrical connection line (9) forms the electrical contact element (3) of the window support (1; 1'; 1"; 1‴).

6. Assembly (100; 100'; 100"; 100‴) according to one of claims 1 through 5, **characterized in that** the window support (1"), in particular the connection segment (2), is implemented at least partially as an enclosure, in particular an outwardly sealing enclosure, for the electrical connector (5).

7. Assembly (100; 100'; 100"; 100‴) according to one of the preceding claims 1 through 6, **characterized in that** the counter contact element (51) is fastened to the surface (56) of the vehicle window (50) by gluing.

8. Assembly (100; 100'; 100"; 100‴) according to one of claims 1 through 7, **characterized in that** the electrical counter contact element (51) extends over at least one section (52) of an edge region (53) of the vehicle window (50).

9. Motor vehicle with an assembly (100; 100'; 100"; 100‴) according to one of claims 1 through 8.

## Revendications

1. - Ensemble (100 ; 100' ; 100" ; 100''') comportant :
une vitre de véhicule (50), laquelle présente deux vitres individuelles (54, 54') reliées entre elles par une couche adhésive (55) ;
un support de vitre (1 ; 1' ; 1" ; 1‴) pour la vitre de véhicule (50), ayant une section de liaison (2) pour la liaison mécanique de la vitre de véhicule (50), qui forme un logement (4) pour la vitre de véhicule (50), et présente au moins un élément de contact électrique (3), lequel est fixé au support de vitre (1 ; 1' ; 1‴) et est disposé au moins en partie à l'intérieur du logement (4), l'élément de contact électrique (3) servant pour le contact électrique avec un contre-élément de contact électrique (51) de la vitre de véhicule (50),
l'élément de contact électrique (3) étant fixé au support de vitre (1 ; 1', 1", 1‴) de telle sorte que, lors d'une liaison mécanique de la vitre de véhicule (50) à la section de liaison (2), l'élément de contact électrique (3) parvient automatiquement en contact électrique avec le contre-élément de contact (51) de la vitre de véhicule (50),
le support de vitre (1' ; 1" ; 1‴) présente une connexion électrique (5) raccordable ou raccordée électriquement avec l'élément de contact électrique (3), à laquelle au moins une ligne d'amenée électrique (30) est connectable,
la connexion électrique (5) présentant une ligne de connexion électrique (9), laquelle est reliée électriquement avec l'élément de contact électrique (3) du support de vitre (1 ; 1' ; 1" ; 1‴),
**caractérisé par le fait que** le contre-élément de contact électrique (51) est réalisé sous la forme d'un conducteur plat qui sort de la vitre de véhicule (50) entre les deux vitres individuelles (54, 54') et qui est fixé sur une surface (56) de la vitre de véhicule (50), et que la ligne de connexion électrique (9) est entourée au moins en partie à une extrémité par un boîtier, lequel est introduit de manière amovible dans un évidement de matière (14) sur la section de liaison (2).

2. - Ensemble (100 ; 100' ; 100" ; 100''') selon la revendication 1, **caractérisé par le fait que** le logement (4) de la section de liaison (2) est réalisé sous la forme d'un logement d'insertion pour l'insertion de la vitre de véhicule (50).

3. - Ensemble (100 ; 100' ; 100" ; 100''') selon la revendication 1, **caractérisé par le fait que** la connexion électrique (5) est disposée sur la section de liaison (2) et est accessible de l'extérieur.

4. - Unité (100 ; 100' ; 100" ; 100‴) selon l'une des revendications 2 ou 3, **caractérisée par le fait que** la connexion électrique (5) présente, ou est formée à partir d', au moins une borne, un bouton-poussoir, une touche à pression (6) ou un élément de liaison similaire, auquel la ligne d'amenée électrique (30) est connectable électriquement.

5. - Ensemble (100 ; 100' ; 100" ; 100‴) selon la revendication 4, **caractérisé par le fait que** la ligne de connexion électrique (9) forme l'élément de contact électrique (3) du support de vitre (1 ; 1' ; 1" ; 1‴).

6. - Ensemble (100 ; 100' ; 100" ; 100‴) selon l'une des revendications 1 à 5, **caractérisé par le fait que** le support de vitre (1"), en particulier la section de liaison (2), est formé au moins en partie en tant qu'enceinte, en particulier enceinte étanche vers l'extérieur, pour la connexion électrique (5).

7. - Ensemble (100 ; 100' ; 100" ; 100‴) selon l'une des revendications précédentes 1 à 6, **caractérisé par le fait que** le contre-élément de contact (51) est fixé à la surface (56) de la vitre de véhicule (50) par collage.

8. - Ensemble (100 ; 100' ; 100" ; 100‴) selon l'une des revendications 1 à 7, **caractérisé par le fait que** le contre-élément de contact électrique (51) s'étend sur au moins une section (52) d'une région de bordure (53) de la vitre de véhicule (50).

9. - Véhicule automobile ayant un ensemble (100 ; 100' ; 100" ; 100‴) selon l'une des revendications 1 à 8.
